# EUROPEAN PATENT SPECIFICATION

(11) **EP 2 122 208 B1**
(45) Date of publication and mention of the grant of the patent: **23.01.2013**
(21) Application number: 07852223.2
(22) Date of filing: 07.12.2007
(51) Int. Cl.: F16H 61/70, B60W 10/06, B60W 10/10, B60W 30/19, F16H 63/50

(54) **A METHOD AND A CONTROL SYSTEM FOR GEAR SHIFTING IN A MOTOR VEHICLE AND A COMPUTER PROGRAM.**
VERFAHREN UND STEUERSYSTEM ZUR GANGSCHALTUNG IN EINEM KRAFTFAHRZEUG UND COMPUTERPROGRAMM
PROCEDE ET SYSTEME DE COMMANDE DE CHANGEMENT DE VITESSE DANS UN VEHICULE A MOTEUR ET PROGRAMME INFORMATIQUE

(30) Priority: 17.01.2007 SE 0700091
(43) Date of publication of application: 25.11.2009
(73) Proprietor: Scania CV AB (PUBL), 151 87 Södertälje (SE)
(72) Inventor: HANSON, Mikael, S-125 51 Älvsjö (SE)
(86) International application number: PCT/SE2007/050951
(87) International publication number: WO 2008/088260

(56) References cited:
- EP-A1- 0 612 642
- EP-A2- 0 512 708
- EP-A2- 1 055 845
- WO-A1-2005/025911
- WO-A1-2006/076944
- DE-A1-102005 002 496
- US-A- 5 150 296
- US-A- 5 195 036
- US-A1- 2001 029 221
- US-A1- 2006 166 785

## Description

### TECHNICAL FIELD

The present invention relates to a system for controlling gear shifting in a motor vehicle provided with an engine, an automatic mechanical transmission (AMT) having a basic gearbox with a main shaft and at least one secondary gearbox, such as a range gearbox or a split gearbox, said main shaft being through an input shaft of the transmission connectible to a shaft of said engine and through an output shaft of the transmission to a driven axle of the vehicle, first synchronization means of said secondary gearbox adapted to be activated upon gear shifting in the secondary gearbox for acting to obtain a synchronous rotational speed of said input shaft, main shaft and output shaft, means for calculating the rotational speed of said engine shaft at the gear of the transmission to be selected by a gear shifting operation for the present rotational speed of said driven axle and by that of said output shaft, and means for controlling, in a gear shifting operation, said engine towards a rotational speed of said shaft thereof corresponding to said rotational speed calculated. The invention also relates to a method for gear shifting in a motor vehicle with an automatic mechanical transmission. Furthermore, the invention relates to a computer program comprising computer program code for implementing such a method, a computer program product comprising a data storage medium readable by an electronic unit and having said computer program stored thereon, and an electronic control unit.

### BACKGROUND ART

The present invention is applicable to motor vehicles provided with an automatic mechanical transmission having a basic gearbox and at least one secondary gearbox, such as a range gearbox or a split gearbox, especially heavy motor vehicles such as lorries, towing vehicles and busses. Such motor vehicles have mostly both a split gearbox and a range gearbox. It is pointed out that "gearbox" is here to be interpreted broadly and the split part, the basic or main part and the range part of the transmission may be enclosed in the same gearbox housing. The invention is directed to gear shifting involving shifting of gear in a said secondary gearbox, but this gear shifting may at the same time involve a shifting of gear in the basic gearbox. The invention is particularly directed to gear shifting involving a shifting of gear in a range gearbox, but it is also concerned with such gear shifting involving a shifting of gear in a split gearbox.

A gear shifting involving a shifting of gear in a said range gearbox in known systems and through known methods of this type will now be discussed for illuminating but not in any way restricting the invention thereto. In this type of manual motor controlled gear shifting the basic gearbox is brought into neutral position with the gears thereof disengaged from said main shaft and said range gearbox is also brought to disengaged position. The engine is then controlled to obtain a rotational speed of the output shaft of the engine corresponding to a rotational speed of the input shaft of said gearbox being synchronous with respect to the rotational speed of the output shaft of the transmission determined by the present rotational speed of the driven axel of the vehicle for the gear to be selected by said shifting action. The synchronization means of the range gearbox is then controlled to act upon the main shaft until the rotational speed of the main shaft is synchronous with respect to the rotational speed of the input shaft and the output shaft of the transmission, so that the gear shifting may be completed in the range gearbox and in the basic gearbox without any substantial torque existing between the engaging parts in the moment of engagement. However, the period of time needed for said synchronization means of the range gearbox to accelerate or retard (brake) said main shaft for obtaining synchronous rotational speed thereof may be comparatively long, since the high transmission ratio of the range gearbox requires a large amount of energy for synchronizing the main shaft. This problem also exists for a gear shifting action involving a shifting of gear in a said split gearbox, although not that accentuated, since the transmission ratio is lower there.

Systems and methods of this type are already known through for example
WO2005025911 which shows a gear shift control device that adapts the speed of the input shaft of the transmission to the next gear before this gear is engaged,
US20010029221 which shows a method and device for controlling gearshift in a range gearbox in a vehicle provided with a CAN,
DE102005002496 which shows a method for controlling gear change in a gearbox, where the main gearbox can be used to synchronise the range gearbox,
EP0612642 which shows a method and device for changing gear in a gearbox with a countershaft, where the rotational speeds of the main shaft and the countershaft is synchronised before a new gear in engaged
and EP1055845 which shows a method and device for changing gear in a vehicle gearbox, that reduces the inertia that has to be synchronised in the range gearbox.

### DISCLOSURE OF THE INVENTION

The object of the present invention is to provide a system for controlling a gear shifting involving a shifting of gear in a secondary gearbox in a motor vehicle with an automatic mechanical transmission of the type defined in the introduction, which makes it possible to shorten the period of time needed for completing the gear shifting operation.

This object is according to the invention obtained by providing such a system, which further comprises a second synchronization means associated with said basic gearbox for acting to obtain a synchronous rotational speed of said input shaft, main shaft and output shaft, and a device adapted to control said gear shifting involving a shifting of gear in said secondary gearbox after the basic gearbox has been brought into a neutral position with the gears thereof disengaged from said main shaft and said secondary gearbox has been brought to disengaged position, said device being adapted to control gear shifting members to start gear shifting for obtaining gear engagement in said secondary gearbox by controlling said first synchronization means to be activated, to control gear shifting members to start gear shifting for obtaining gear engagement in said basic gearbox before said synchronous rotational speed has been obtained by the action of said first synchronization means by controlling said second synchronization means of the basic gearbox to be activated for assisting said first synchronization means in acting for obtaining said synchronous rotational speed and to control said gear shifting members to complete gear shifting in the secondary gearbox and in the basic gearbox when said synchronous rotational speed has been reached. This means that the time needed for completing the gear shifting action may be considerably shortened, especially in the case of carrying out a gear shifting action involving a shifting of gear in a range gearbox. This is obtained by influencing the part of the gearbox to be synchronized from two directions, namely both by utilizing the output shaft of the gearbox having a rotational speed determined by the rotational speed of the driven axle of the vehicle, and the input shaft of the gearbox having a rotational speed determined by the engine for the gear to be selected by the gear shifting. This means in the case of changing gear in said range gearbox that the synchronization means of the basic gearbox is controlled to assist the synchronization means of the range gearbox in said synchronization action, so that the synchronous rotational speed needed for completing the gear shifting operation may be reached earlier than if only the range gearbox synchronization means were used.

According to an embodiment of the invention the system is adapted for controlling gear shifting in a motor vehicle with a transmission having a secondary gearbox in the form of a range gearbox, and said device is adapted to control a said gear shifting involving a shifting of gear in said range gearbox. The present invention is particularly interesting when carrying out such a gear shifting operation, since the transmission ratio in said range gearbox is high and the period of time normally required for synchronizing said main shaft is rather long, so that there is on one hand desirable to reduce this time and on the other a considerable reduction of said time may be obtained by "synchronizations from two directions" in accordance with the invention in this case.

According to another embodiment of the invention said device is adapted to control said first synchronization means to act upon said main shaft by establishing an accelerating or retarding connection of said output shaft to said main shaft for influencing the main shaft towards said synchronous rotational speed and to control said synchronization means to act upon said main shaft by establishing an accelerating or retarding connection of said input shaft to said main shaft for influencing the main shaft towards said synchronous rotational speed, which constitutes a preferred way of obtaining synchronization of said main shaft through both the synchronization means of the basic gearbox and those of the range gearbox.

According to another embodiment of the invention the system is adapted for controlling gear shifting in a motor vehicle having a basic gearbox with a lay shaft for connecting said input shaft to said main shaft, said lay shaft having gears engaging a gear each engagable with said main shaft by synchronization means of said basic gearbox, in which the device is adapted to control means to keep said input shaft and said lay shaft rigidly engaged throughout said gear shifting. This means that the rotational speed of the lay shaft will vary with the rotational speed of the output shaft of the engine and reach a synchronous rotational speed when the engine has been controlled to deliver the rotational speed according to said calculation, whereupon the synchronization means of said basic gearbox will establish an accelerating or retarding connection of said lay shaft with said main shaft for influencing the main shaft towards said synchronous rotational speed at the same time as a corresponding influence is achieved by the synchronization means of the range gearbox.

According to another embodiment of the invention the system is adapted to control gear shifting in a motor vehicle with a transmission having a split gearbox for connecting said input shaft to said basic gearbox, in which said device is adapted to control means to keep one split gear in engaged position throughout said gear shifting, when said gear shifting involves shifting of gear in said range gearbox. Said device will then be adapted to control said split gearbox to keep said input shaft and said lay shaft rigidly engaged throughout said gear shifting.

According to another embodiment of the invention the system is adapted to control gear shifting in a motor vehicle with a transmission having a secondary gearbox in the form of a split gearbox, and said device is adapted to control gear shifting involving a shifting of gear in said split gearbox. This means that the time for completing such gear shifting may be reduced by using the synchronization means of said split gearbox as well as of said basic gearbox for obtaining said synchronous rotational speed for completing said gear shifting operation.

According to another embodiment of the invention the device is adapted to control said first synchronization means to act upon a shaft of said split gearbox by establishing an accelerating or retarding connection of said input shaft to said split gearbox shaft for influencing said split gearbox shaft towards said synchronous rotational speed, the device is adapted to control means to keep the main shaft and the output shaft rigidly engaged throughout said gear shifting, and the device is adapted to control said second synchronization means to act upon said split gearbox shaft by establishing an accelerating or retarding connection of said main shaft to said split gearbox shaft for influencing the split gearbox shaft towards said synchronous rotational speed. Said split gearbox shaft will in this way obtain said synchronous rotational speed in a shorter period of time than when using known systems for controlling gear shifting involving shifting of a gear in a split gearbox, so that the gear shifting operation may be completed earlier.

According to another embodiment of the invention, in which said split gearbox shaft is formed by a part of a lay shaft of the basic gearbox adapted to connect said input shaft to the main shaft, said lay shaft having gears engaging a gear each engagable with said main shaft by said second synchronization means of the basic gearbox, said device is adapted to control said first synchronization means of the split gearbox to act upon said lay shaft by influencing gears of said split gearbox to form an engagement of said input shaft.

According to another embodiment of the invention the system is adapted to control gear shifting in a motor vehicle having a transmission with a range gearbox for connecting said output shaft to said basic gearbox, and said device is then adapted to control means to keep one range gear in engaged position throughout said gear shifting in said split gearbox, so that the main shaft of the basic gearbox will then have said synchronous rotational speed determined by the rotational speed of the driven axle of the vehicle throughout the gear shifting operation in the split gearbox.

The invention also relates to a method having the features defined in claim 11 for gear shifting in a motor vehicle with an automatic mechanical transmission (AMT) having a basic gearbox with a main shaft and at least one secondary gearbox, such as a range gearbox or split gearbox, said main shaft being through an input shaft of the transmission connectible to a shaft of an engine of the vehicle and through an output shaft of the transmission to a driven axle of the vehicle, in which said gear shifting involves a shifting of gear in said secondary gearbox.

The invention also relates to a computer program having the features defined in claim 21, a computer program product having the features defined in claim 31 and an electronic control unit having the features defined in claim 32.

### BRIEF DESCRIPTION OF THE DRAWINGS

The invention will in the following be more closely described by means of embodiment examples, with reference to the appended drawings, where:
Fig 1 is a schematic outline diagram illustrating a system according to the present invention,
Fig 2 is a simplified view illustrating the system according to the present invention more in detail for explaining how a gear shifting operation is carried out according to embodiments of a method according to the invention,
Fig 3 is a graph used to show the degree of engagement of gears in the basic gearbox and in the range gearbox in gear shifting involving shifting of gear in said range gearbox according to the present invention,
Fig 4 is a schematic outline diagram of an electronic unit for implementing the method according to the invention, and
Fig 5 is a flow diagram illustrating a method according to an embodiment of the invention.

### EMBODIMENTS OF THE PRESENT INVENTION

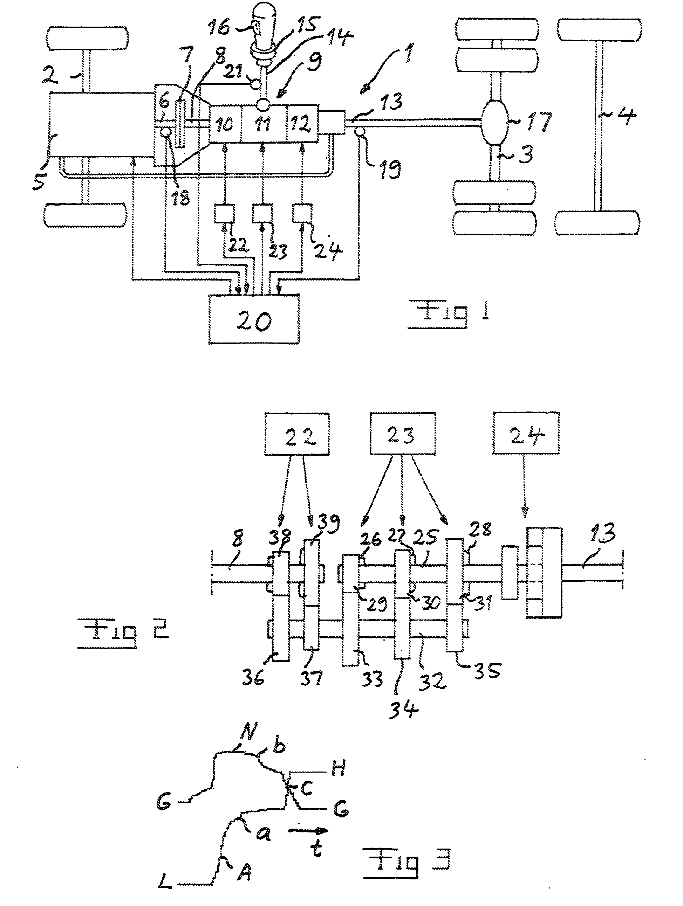

Parts of a motor vehicle 1 in the form of a truck for explaining the present invention are very schematically shown in Fig 1. The vehicle has a front wheel axle 2, a first rear wheel axle 3 in the form of two half shafts and a second rear wheel axle 4. Many other wheel configurations than the one shown here are of course within the scope of the invention, and more than one axle may be driven.

The vehicle is further provided with an engine 5 with an output shaft 6 connected through a clutch 7 to an input shaft 8 of an automatic mechanical transmission 9 comprising a gearbox having a split gearbox 10 for engagement with said input shaft 8, a main or basic gearbox 11 and a range gearbox 12 for engagement with an output shaft 13 of the transmission driving the wheel axle 3 through a differential 17. Said transmission 9 has a gear shift lever 14 for selecting different modes of Neutral, Drive, Reversing, Parking etc and a button for changing between an automatic gear shifting according to a computer program and a manual gear shifting in which the driver selects the gear but a program shifts the gear. This way of gear shifting has in the Fig 1 been symbolized by a gear shift lever 14 provided with a ring 15 for actuating a gear shifting in said range gearbox from low to high range and conversely, as well as a split selector switch 16 for actuating gear shifting in said split gearbox between low and high, although said ring and split selector switch are in fact integrated in said computer program.

12 different gears or gear ratios may in this way be obtained through said transmission if the basic gearbox has three different gears which may be brought to engagement with a main shaft of said basic gearbox. This means more exactly that the gear positions 1, 3 and 5 may be obtained when the split selector is in the position low and the range gearbox in low range, the gear positions 2, 4 and 6 when the split selector is moved into high, whereas when the range gearbox is in high range the gear positions 7-12 may be obtained through correspondingly actuating the lever 14 and the split selector 16. This is conventional technique, and the gearboxes connected in series may have the following optional factors, which are to be multiplied for obtaining the total transmission ratio of the transmission:
the split gearbox: 1 and 1,233
the basic gearbox (shift lever 14): 1, 1,549 and 2,461
the range gearbox: 1 and 3,750,

The lower factor, the higher gear position. Thus, the transmission ratio of the transmission is defined to be 1 for the highest gear position, namely the gear 12. The twelve gear positions will in this case have the following relationship between the rotational speed of the input shaft 8 and the output shaft 13 of the transmission:

| | |
|---|---|
| 1: | 11,379 |
| 2: | 9,227 |
| 3: | 7,166 |
| 4: | 5,811 |
| 5: | 4,625 |
| 6: | 3,750 |
| 7: | 3,034 |
| 8: | 2,461 |
| 9: | 1,911 |
| 10: | 1,549 |
| 11: | 1,233 |
| 12: | 1,000 |

The system for controlling gear shifting according to the invention comprises means 18 for measuring the rotational speed of the engine shaft and by that of said input shaft 8 and means 19 adapted to measure the rotational speed of the output shaft 13 of the transmission. Signals from the means 18 and 19 are sent to a device 20 also receiving information about a gear to be selected by a gear shifting from a sensor 21.

The three gearboxes connected in series, split gearbox 10, basic gearbox 11 and range gearbox 12, are each provided with synchronisation means 22-24, which are controlled by the device 20 and the function of which will be described below.

How a gear shifting takes place according to a method according to a first embodiment of the invention, in which said gear shifting involves a shifting of gear in the range gearbox, will now be explained while referring also to Figs 2 and 3. It is shown in Fig 2 how a main shaft 25 extends through the basic gearbox. This main shaft may through influence of sleeves 26-28 be brought into engagement with one of three gears 29-31 by influence of said synchronization means 23 upon one of said sleeves. By moving the shift lever 14 into neutral position the gear 29-31 in question will be disengaged from said main shaft 25. The basic gearbox also comprises a lay shaft 32 arranged in parallel with the main shaft 25 and carrying gears 33-35 rotating therewith and in engagement with a respective of the gears 29-31. The lay shaft 32 has also gears 36, 37 rotating therewith and in engagement with gears 38, 39 of said split gearbox, which may through influence of the synchronization means 22 upon sleeves be brought into engagement with the input shaft 8. The range gearbox is provided with a planetary gearing for connecting said main shaft 25 to the output shaft 13 of the transmission by influencing the synchronization means 24 of the range gearbox to act upon corresponding sleeves for one connection according to low range and one according to high range. A gearbox having this structure is already known, and it is also known to have synchronization means for said basic gearbox in an automatic mechanical transmission of this type.

How a gear shifting involving a shifting of gear in the range gearbox is carried out according to an embodiment of the present invention will now be described while referring to Figs 1-3. It is pointed out that this gear shifting may then also involve a shifting of gear in the basic gearbox and accordingly not only a shifting from high range to low range or conversely. The gear shifting action is started by bringing the basic gearbox into neutral position with the gears 29-31 thereof disengaged from the main shaft 25. The range ring is also brought into the position for the new range gear, low or high, which means a disconnection of the main shaft 25 with respect to the output shaft 13. The rotational speed of the engine shaft and thereby of the input shaft 8 at the gear of the transmission to be selected by said gear shifting operation is calculated by the device 20 for the present rotational speed of said driven axle and thereby of said output shaft through information thereabout received from means 19 and the transmission ratio values stored. The engine is then controlled by the device 20 towards the rotational speed calculated of the engine shaft and thereby of the input shaft 8 corresponding to the rotational speed calculated. The control device 20 now controls the synchronization means 24 of the range gearbox for acting to obtain a synchronous rotational speed of said input shaft 8, main shaft 25 and output shaft 13 while establishing a connection between the output shaft 13 and the main shaft 25, so that the output shaft 13 will accelerate or retard (brake) the main shaft 25. The lay shaft 32 is throughout the entire gear shifting operation kept rigidly engaged with the input shaft 8 through one of the two split gears. The control device controls the synchronization means 23 of the basic gearbox to act upon the sleeve for the gear selected before said synchronous rotational speed has been obtained by the action of the synchronization means 24 of the range gearbox for assisting the latter synchronization means in acting for obtaining said synchronous rotational speed. Accordingly the main shaft 25 will by this be influenced towards said synchronous rotational speed also by the input shaft with an engine controlled rotational speed through said lay shaft 32. This means that the main shaft will be influenced from both the input side and the output side of the transmission through the input shaft and the output shaft already having said synchronous rotational speed for the gear to be obtained by said gear shifting operation. When the main shaft in this way has reached said synchronous rotational speed the gear shifting in the range gearbox as well as in the basic gearbox will be completed by rigidly engaging the gear in question in the basic gearbox with said main shaft and the output shaft with the main shaft through a said range gear. The time required for carrying out a gear shifting operation involving a shifting of gear in the range gearbox may in this way be considerably shortened, such as reduced by in the order of 50% with respect to such a gear shifting operation already known, in which no synchronization means associated with the basic gearbox is used, but it is waited until the synchronization means of the range gearbox has obtained a synchronous rotational speed of the main shaft before the gear shifting in the basic gear box and in the range gearbox is completed.

It is shown in Fig 3 how a gear shifting is carried out from low range L to high range H without changing the gear G in the basic gearbox. The line A shows the position of the range gear and the line B of the gear in the basic gearbox, a indicates when the synchronization means 24 starts to accelerate the main shaft 25 and b when the synchronization means 23 is controlled to assist in accelerating the main shaft, whereas the point c indicates when the main shaft has reached a synchronous rotational speed and the range gearbox as well as the basic gearbox are brought into the target position, i.e. where the gear shifting operation is completed.

A method for gear shifting according to another embodiment of the invention relates to a gear shifting operation in which the gear shifting involves a shifting of gear in the split gearbox 10. One of the range gears, low or high, is throughout this gear shifting operation in engagement for keeping the main shaft and the output shaft rigidly engaged. This means that the main shaft has a rotational speed determined by the rotational speed of the output shaft 13 and by that of the driven axle of the vehicle, and the synchronous rotational speed to be obtained for completing the gear shifting operation is that of the lay shaft 32. Thus, the basic gearbox is brought into neutral position, the split gear disengaged and the engine controlled to obtain the rotational speed of the input shaft 8 calculated for the gear to be selected, whereupon the synchronization means 22 of the split gearbox is controlled to start to connect the input shaft 8 with the lay shaft by starting to engage a recently selected gear 38 or 39 with the input shaft. This will result in a retardation or acceleration of the lay shaft 32. The synchronization means 23 of the basic gearbox is at the same time controlled to start to act upon the sleeve 26-28 in question for starting to engage the respective gear with the main shaft 25 and by that assisting the synchronization means 22 of the split gear box in bringing the lay shaft 32 to a rotational speed enabling completion of the gear shifting operation.

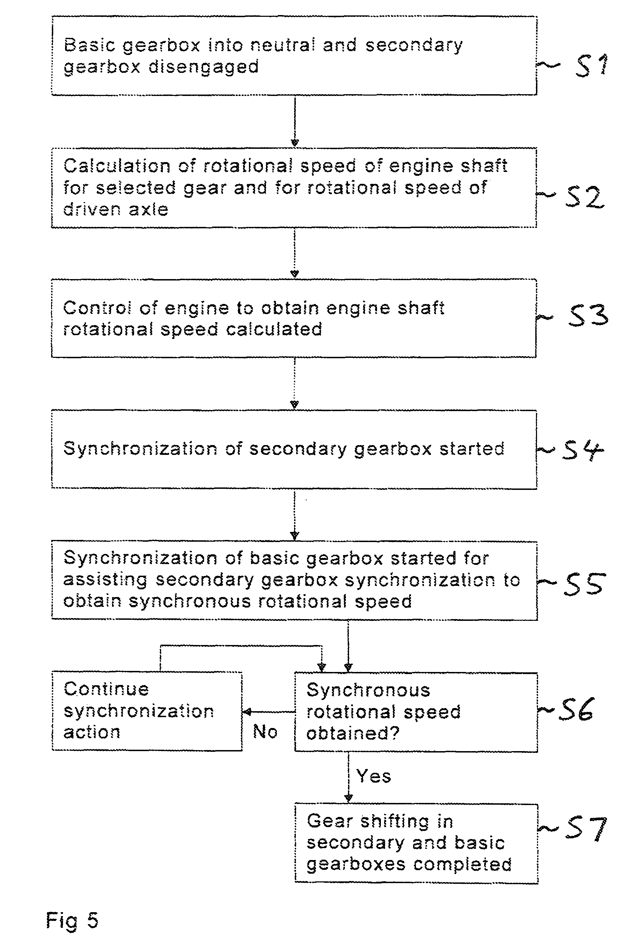

The flow diagram illustrating a method according to an embodiment of the invention is shown in Fig 5. In a first step S1 a basic gearbox is brought into a neutral position and the engaged gear of the secondary gearbox is moved out of engagement. The rotational speed of the engine shaft at the gear of the transmission to be selected by said gear shifting operation is then calculated for the present rotational speed of the driven axle of the vehicle in step S2. The engine is then in step S3 controlled towards a rotational speed of the shaft thereof corresponding to said rotational speed calculated. Synchronization of the secondary gearbox is then started in a fourth step S4, whereupon synchronization of the basic gearbox is in a fifth step S5 started before the synchronization in step S4 has been completed for assisting the synchronization in step S4 in acting for obtaining synchronous rotational speed needed for completing the gear shifting operation. It is in step S6 checked whether said synchronous rotational speed has been obtained or not, and if the answer to this question is yes gear shifting in the secondary gearbox and in the basic gearbox are completed in step S7. If the answer to this question is no said synchronization action is continued and the checking in step S6 is carried out again, and this loop is carried out until said synchronous rotational speed has been reached.

Computer program code for implementing a method according to the invention is suitably included in a computer program, which is loadable into the internal memory of a computer, such as the internal memory of an engine control unit of the vehicle. Such a computer program is suitably provided via a computer program product comprising a data storage medium readable by an electronic control unit, which data storage medium has the computer program stored thereon. Said data storage medium is for instance an optical data storage medium in the form of a CD-ROM disc, a DVD disc etc, a magnetic data storage medium in the form of a hard disc, a diskette, a cassette tape etc, or a memory of the type ROM, PROM, EPROM or EEPROM or a Flash memory.

The computer program according to an embodiment of the invention comprises computer program code for causing a computer, e.g. in the form of an electronic unit:
- to sense a control of said basic gearbox to move into neutral position with the gears thereof disengaged from said main shaft and said secondary gearbox to disengaged position,
- to calculate the rotational speed of said engine shaft at the gear of the transmission to be selected by said gear shifting operation for the present rotational speed of said driven axle and by that of said output shaft,
- to control the engine towards a rotational speed of said shaft thereof corresponding to said rotational speed calculated,
- to control gear shifting for obtaining gear engagement in said secondary gearbox to start by controlling synchronization means of said secondary gearbox to be activated for acting to obtain a synchronous rotational speed of said input shaft, main shaft and output shaft, - to control gear shifting for obtaining gear engagement in the basic gearbox to start before said synchronous rotational speed has been obtained by controlling synchronization means of said basic gearbox to be activated for assisting said synchronization means of the secondary gearbox in acting for obtaining said synchronous rotational speed, and
- to control said gear shifting in the secondary gearbox and in the basic gearbox to be completed when said synchronous rotational speed is reached.

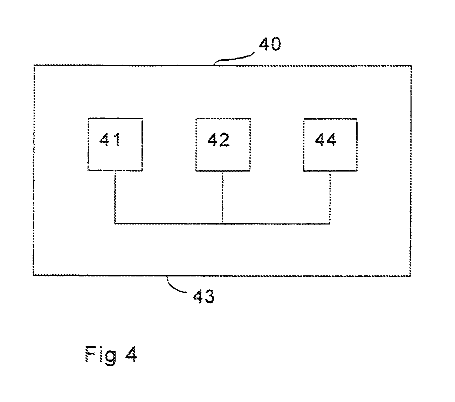

Fig 4 very schematically illustrates an electronic control unit 40 comprising an execution means 41, such as a central processing unit (CPU) for executing computer software. The execution means 41 communicates with a memory 42, for instance of the type RAM, via a data bus 43. The control unit 40 also comprises data storage medium 44, for instance in the form of a memory of the type ROM, PROM, EPROM or EEPROM or a Flash memory. The execution means 41 communicates with the data storage medium 44 via the data bus 43, A computer program comprising computer program for implementing a method according to the invention is stored on the data storage medium 44.

The invention is of course not in any way restricted to the embodiments described above. On the contrary, many possibilities to modifications thereof will be apparent to a person with ordinary skill in the art without departing from the basic idea of the invention as defined in the appended claims.

The invention is applicable to automatic mechanical transmissions having other appearances than shown in the Figures.

## Claims

1. A system for controlling gear shifting in a motor vehicle (1) provided with:
- an engine (5),
- an automatic mechanical transmission, also defined as AMT, having a basic gearbox (11) with a main shaft (25) and at least one secondary gearbox, such as a range gearbox (12) or a split gearbox (10), said main shaft being through an input shaft (8) of the transmission connectible to a shaft (6) of said engine (5) and through an output shaft (13) of the transmission to a driven axle (3) of the vehicle (1),
- first synchronization means (22, 24) of said secondary gearbox (10, 12) adapted to be activated upon gear shifting in the secondary gearbox (10, 12) for acting to obtain a synchronous rotational speed of said input shaft (8), main shaft (25) and output shaft (13),
- means for calculating the rotational speed of said engine shaft (6) at the gear of the transmission to be selected by a gear shifting operation for the present rotational speed of said driven axle (3) and by that of said output shaft (13), and
- means for controlling, in a said gear shifting operation, said engine (5) towards a rotational speed of said shaft thereof corresponding to said rotational speed calculated,
wherein the system also comprises:
- second synchronization means (23) associated with said basic gearbox (11) for acting to obtain a synchronous rotational speed of said input shaft (8), main shaft (25) and output shaft (13), and
- a device (20) adapted to control said gear shifting involving a shifting of gear in said secondary gearbox (10, 12) after the basic gearbox (11) has been brought into a neutral position with the gears (29-31) thereof disengaged from said main shaft (25) and said secondary gearbox (10, 12) has been brought to disengaged position, said device being adapted to control gear shifting members to start gear shifting for obtaining gear engagement in said secondary gearbox (10, 12) by controlling said first synchronization means to be activated, to control gear shifting members to start gear shifting for obtaining gear engagement in said basic gearbox (11) before said synchronous rotational speed has been obtained by the action of said first synchronization means (22, 24) by controlling said second synchronization means (23) of said basic gearbox (11) to be activated for assisting said first synchronization means (22, 24) in acting for obtaining said synchronous rotational speed and to control said gear shifting members to complete gear shifting in the secondary gearbox (10, 12) and in the basic gearbox (11) when said synchronous rotational speed has been reached.

2. A system according to claim 1 for controlling gear shifting in a motor vehicle (1) with a transmission having a secondary gearbox in the form of a range gearbox (12), wherein said device (20) is adapted to control a said gear shifting involving a shifting of gear in said range gearbox (12).

3. A system according to claim 2, wherein said device (20) is adapted to control said first synchronization means (24) to act upon said main shaft (25) by establishing an accelerating or retarding connection of said output shaft (13) to said main shaft (25) for influencing the main shaft (25) towards said synchronous rotational speed and to control said second synchronization means (23) to act upon said main shaft (25) by establishing an accelerating or retarding connection of said input shaft (8) to said main shaft (25) for influencing the main shaft (25) towards said synchronous rotational speed.

4. A system according to claim 3 for controlling gear shifting in a motor vehicle (1) having a basic gearbox (11) with a lay shaft (32) for connecting said input shaft (8) to said main shaft (25), said lay shaft having gears (33-35) engaging a gear (29-31) each engagable with said main shaft (25) by synchronization means (23) of said basic gearbox (11), wherein the device (20) is adapted to control means to keep said input shaft (8) and said lay shaft (32) rigidly engaged throughout said gear shifting.

5. A system according to claim 3 or 4, which is adapted to control gear shifting in a motor vehicle (1) with a transmission having a split gearbox (10) for connecting said input shaft (8) to said basic gearbox (11), wherein said device (20) is adapted to control means to keep one split gear in engaged position throughout said gear shifting.

6. A system according to claim 5, wherein said device is adapted to control said split gearbox (10) to keep said input shaft (8) and said lay shaft (32) rigidly engaged throughout said gear shifting.

7. A system according to claim 1 for controlling gear shifting in a motor vehicle (1) with a transmission having a secondary gearbox in the form of a split gearbox (10), wherein said device (20) is adapted to control gear shifting involving a shifting of gear in said split gearbox (10).

8. A system according to claim 7, wherein device (20) is adapted to control said first synchronization means to act upon a shaft of said split gearbox (10) by establishing an accelerating or retarding connection of said input shaft (8) to said split gearbox shaft for influencing said split gearbox shaft towards said synchronous rotational speed, that said device is adapted to control means to keep the main shaft (25) and the output shaft (8) rigidly engaged throughout said gear shifting, and that said device is adapted to control said second synchronization means (23) to act upon said split gearbox shaft by establishing an accelerating or retarding connection of said main shaft (25) to said split gearbox shaft for influencing the split gearbox shaft towards said synchronous rotational speed.

9. A system according to claim 8, in which said split gearbox shaft is formed by a part of a lay shaft (32) of the basic gearbox (11) adapted to connect said input shaft (8) to the main shaft (25), said lay shaft (32) having gears (33-35) engaging a gear (29-31) each engagable with said main shaft (25) by said second synchronization means (23) of said basic gearbox (11), wherein said device is adapted to control said first synchronization means (22) of said split gearbox to act upon said lay shaft (32) by influencing gears of said split gearbox to form an engagement with said input shaft (8).

10. A system according to claim 8 or 9 for controlling gear shifting in a motor vehicle (1) having a transmission with a range gearbox (12) for connecting said output shaft (13) to said basic gearbox (11), wherein said device is adapted to control means to keep one range gear in engaged position throughout said gear shifting in said split gearbox (10).

11. A method for gear shifting in a motor vehicle (1) with an automatic mechanical transmission, also defined as AMT, having a basic gear-box (11) with a main shaft (25) and at least one secondary gearbox, such as a range gearbox (12) or a split gearbox (10), said main shaft (25) being through an input shaft (8) of the transmission connectible to a shaft (6) of an engine (5) of the vehicle and through an output shaft (13) of the transmission to a driven axle (3) of the vehicle,
in which said gear shifting involves a shifting of gear in said secondary gearbox (10, 12) and comprises the following steps:
a) the basic gearbox (11) is brought into neutral position with the gears (29-31) thereof disengaged from said main shaft (25) and the secondary gearbox (10, 12) is brought to a disengaged position,
b) the rotational speed of said engine shaft (6) at the gear of the transmission to be selected by said gear shifting operation is calculated for the present rotational speed of said driven axle (3) and by that of said output shaft (13),
c) the engine (5) is controlled towards a rotational speed of said shaft (6) thereof corresponding to said rotational speed calculated,
d) gear shifting for obtaining gear engagement in the secondary gearbox (10, 12) is started by activating synchronization means (22, 24) of said secondary gearbox (10, 12) for acting to obtain a synchronous rotational speed of said input shaft (8), main shaft (25) and output shaft (13),
e) gear shifting for obtaining gear engagement in the basic gearbox (11) is started before said synchronous rotational speed has been obtained in aforementioned step d) by activating synchronization means (23) of said basic gearbox (11) for assisting said synchronization means of the secondary gearbox (10, 12) in acting for obtaining said synchronous rotational speed, and
f) said gear shifting in the secondary gearbox (10, 12) and in the basic gearbox (11) are completed when said synchronous rotational speed is reached.

12. A method according to claim 11, wherein said gear shifting involves a gear shifting in a range gearbox (12) of said transmission.

13. A method according to claim 12, wherein aforementionend step d) comprises controlling of synchronization means (24) of said range gearbox (12) to act upon said main shaft (25) by establishing an accelerating or retarding connection of said output shaft (13) to said main shaft for influencing the main shaft (25) towards said synchronous rotational speed, and that aforementioned step e) comprises controlling of said synchronization means (23) of the basic gearbox (11) to act upon said main shaft by establishing an accelerating or retarding connection of said input shaft (8) to said main shaft (25) for influencing the main shaft (25) towards said synchronous rotational speed.

14. A method according to claim 13, wherein said gear shifting is carried out for a basic gearbox (11) having a lay shaft (32) for connecting said input shaft (8) to the main shaft (25), said lay shaft having gears (33-35) engaging a gear (29-31) each engagable with said main shaft by synchronisation means (23) of said basic gearbox (11), and that said input shaft (8) and said lay shaft (32) are kept rigidly engaged throughout said gear shifting.

15. A method according to claim 13 or 14, wherein it is carried out for a transmission having a split gearbox (10) for connecting said input shaft (8) to the basic gearbox (11), and that one split gear is kept in engaged position throughout said gear shifting.

16. A method according to claim 15, wherein said split gearbox (10) is controlled to keep said input shaft (8) and said lay shaft (32) rigidly engaged throughout said gear shifting.

17. A method according to claim 11, wherein said gear shifting involves a gear shifting in a split gearbox (10) of said transmission.

18. A method according to claim 17, wherein aforementioned step d) comprises controlling of synchronization means (24) of said split gearbox (10) to act upon a shaft of said split gearbox by establishing an accelerating or retarding connection of said input shaft (8) to said split gearbox shaft for influencing said split gearbox shaft towards said synchronous rotational speed, that the main shaft (25) and the output shaft (13) are kept rigidly engaged throughout said gear shifting, and that aforementioned step e) comprises controlling of said synchronization means (23) of the basic gearbox (11) to act upon said split gearbox shaft by establishing an accelerating or retarding connection of said main shaft to said split gearbox shaft for influencing the split gearbox shaft towards said synchronous rotational speed.

19. A method according to claim 18, wherein said split gearbox shaft is formed by a part of a lay shaft (32) of the basic gearbox (11) adapted for connecting said input shaft (8) to the main shaft (25), said lay shaft (32) having gears (33-35) engaging a gear (29-31) each engagable with said main shaft (25) by synchronization means (23) of said basic gearbox, and that said controlling in step e) comprises controlling of said synchronization means (22) of said split gearbox (10) to act upon said lay shaft (32) by influencing gears of said split gearbox (10) to form an engagement with said input shaft (8).

20. A method according to claim 18 or 19, wherein it is carried out for a transmission having a range gearbox (12) for connecting said output shaft (13) to the basic gearbox (11), and that one range gear is kept in engaged position throughout said gear shifting.

21. A computer program loadable into the internal memory of a computer, which computer program comprises computer program code for causing the computer, for a motor vehicle (1) provided with an automatic mechanical transmission, also defined as AMT, having a basic gearbox (11) with a main shaft (25) and at least one secondary gearbox, such as a range gearbox (12) or a split gearbox (10), said main shaft being through an input shaft (8) of the transmission connectible to a shaft (6) of an engine (5) of the vehicle and through an output shaft (13) of the transmission to a driven axle (3) of the vehicle, in which the computer program is adapted to control gear shifting involving a shifting of gear in said secondary gearbox (10, 12):
- to sense a control of said basic gearbox (11) to move into neutral position with the gears thereof disengaged from said main shaft (25) and said secondary gearbox (10, 12) to be brought to a disengaged position,
- to calculate the rotational speed of said engine shaft (6) at the gear of the transmission to be selected by said gear shifting operation for the present rotational speed of said driven axle (3) and by that of said output shaft (13),
- to control the engine (5) towards a rotational speed of said shaft (6) thereof corresponding to said rotational speed calculated,
- to control gear shifting for obtaining gear engagement in said secondary gearbox (10, 12) to start by controlling synchronization means (22, 24) of said secondary gearbox to be activated for acting to obtain a synchronous rotational speed of said input shaft (8), main shaft (25) and output shaft (13),
- to control gear shifting for obtaining gear engagement in the basic gearbox (11) to start before said synchronous rotational speed has been obtained by controlling synchronization means (23) of said basic gearbox (11) to be activated for assisting said synchronization means of the secondary gearbox (10, 12) in acting for obtaining said synchronous rotational speed, and
- to control said gear shifting in the secondary gearbox (10, 12) and in the basic gearbox (11) to be completed when said synchronous rotational speed is reached.

22. A computer program according to claim 21, wherein the computer program comprises computer program code for causing the computer:
- to control gear shifting involving a gear shifting in a range gearbox (12) of said transmission.

23. A computer program according to claim 22, wherein the computer program comprises computer program code for causing the computer:
- to control said synchronization means (24) of said range gearbox (12) to act upon said main shaft (25) by establishing an accelerating or retarding connection of said output shaft (13) to said main shaft (25) for influencing the main shaft (25) towards said synchronous rotational speed, and
- to control said synchronization means (23) of the basic gearbox to act upon said main shaft (25) by establishing an accelerating or retarding connection of said input shaft (8) to said main shaft (25) for influencing the main shaft (25) towards said synchronous rotational speed.

24. A computer program according to claim 23, wherein the computer program comprises computer program code for causing the computer:
- to control gear shifting for a basic gearbox (11) having a lay shaft (32) for connecting said input shaft (8) to the main shaft, said lay shaft having gears (33-35) engaging a gear (29-31) each engagable with said main shaft (25) by synchronization means of said basic gearbox (11), and
- to control said input shaft (8) and said lay shaft (32) to be kept rigidly engaged throughout said gear shifting.

25. A computer program according to claim 23 or 24, wherein the computer program comprises computer program code for causing the computer:
- to control gear shifting for a transmission having a split gearbox (10) for connecting said input shaft (8) to the basic gearbox (11), and
- to control one split gear to be kept in engaged position throughout said gear shifting.

26. A computer program according to claim 25, wherein the computer program comprises computer program code for causing the computer:
- to control said split gearbox (10) to keep said input shaft (8) and said lay shaft (32) rigidly engaged throughout said gear shifting.

27. A computer program according to claim 21, wherein the computer program comprises computer program code for causing the computer:
- to control gear shifting involving a gear shifting in a split gearbox (10) of said transmission.

28. A computer program according to claim 27, wherein the computer program comprises computer program code for causing the computer:
- to control synchronization means (22) of said split gearbox (10) to act upon a shaft of said split gearbox (10) by establishing an accelerating or retarding connection of said input shaft (8) to said split gearbox shaft for influencing said gearbox shaft towards said synchronous rotational speed,
- to control the main shaft (25) and the input shaft (8) to be kept rigidly engaged throughout said gear shifting, and
- to control said synchronization means (23) of the basic gearbox (11) to act upon said split gearbox shaft by establishing an accelerating or retarding connection of said main shaft (25) to said split gearbox shaft for influencing the split gearbox shaft towards said synchronous rotational speed.

29. A computer program according to claim 28, in which said split gearbox shaft is formed by a part of a lay shaft (32) of the basic gearbox adapted for connecting said input shaft (8) to the main shaft (25), said lay shaft having gears (33-35) engaging a gear (29-31) each engagable with said main shaft (25) by synchronization means (23) of the basic gearbox (11) wherein the computer program comprises computer program code for causing the computer:
- to control synchronization means (22) of said split gearbox (10) to act upon said lay shaft (32) by influencing gears of said split gearbox (10) to form an engagement with said input shaft (8) for influencing said lay shaft (32) towards said synchronous rotational speed.

30. A computer program according to claim 28 or 29 for controlling gear shifting for a transmission having a range gearbox (12) for connecting said output shaft (13) to said basic gearbox (11), wherein the computer program comprises computer program code for causing the computer:
- to control one range gear to be kept in engaged position throughout said gear shifting.

31. A computer program product comprising a data storage medium (44) readable by an electronic unit (40), wherein a computer program according to any of claims 21-30 being stored on said data storage medium.

32. An electronic unit comprising an execution means (41), a memory (42) connected to the execution means and a data storage medium (44) connected to the execution means, wherein a computer program according to any of claims 21-30 being stored on said data storage medium.

## Patentansprüche

1. System zum Steuern eines Gangschaltvorgangs in einem Kraftfahrzeug (1), umfassend:
eine Brennkraftmaschine (5),
ein mechanisches Automatikgetriebe, auch als AMT definiert, das einen grundlegenden Getrieberaum (11) mit einer Hauptwelle (25) und einen sekundären Getrieberaum aufweist, wie einen Bereichsgetrieberaum (12) oder einen geteilten Getrieberaum (10), wobei die Hauptwelle durch eine Antriebswelle (8) des Getriebes mit einer Welle (6) der Brennkraftmaschine (5) koppelbar ist und durch eine Abtriebswelle (13) des Getriebes mit einer angetriebenen Achse (3) des Fahrzeugs (1) koppelbar ist,
eine erste Synchronisierungseinrichtung (22, 24) des sekundären Getrieberaums (10, 12), die eingerichtet ist, um bei einem Gangschaltvorgang in dem sekundären Getrieberaum (10, 12) aktiviert zu werden zum Bewirken eines Gewinnens einer synchronen Drehgeschwindigkeit der Antriebswelle (8), der Hauptwelle (25) und der Abtriebswelle (13),
eine Einrichtung zum Berechnen der Drehgeschwindigkeit der Brennkraftmaschinenwelle (6) und des Gangs des Getriebes, der durch einen Gangschaltvorgang für die momentane Drehgeschwindigkeit der angetriebenen Achse (3) und jener der Abtriebswelle (13) auszuwählen ist, und
eine Einrichtung zum Steuern der Brennkraftmaschine (5) während des Gangschaltvorgangs hin zu einer Drehgeschwindigkeit von deren Welle, die der berechneten Drehgeschwindigkeit entspricht,
wobei das System ebenso umfasst:
eine zweite Synchronisierungseinrichtung (23), die mit dem grundlegenden Getrieberaum (11) assoziiert ist zum Bewirken eines Gewinnens einer synchronen Drehgeschwindigkeit der Antriebswelle (8), der Hauptwelle (25) und der Abtriebswelle (13), und
eine Einrichtung (20), die eingerichtet ist, um den Gangschaltvorgang unter Beteiligung eines Schaltvorgangs des Gangs in dem sekundären Getrieberaum (10, 12) zu steuern, nachdem der grundlegende Getrieberaum (11) in eine neutrale Stellung verbracht wurde, wobei dessen Gänge (29-31) nicht im Eingriff mit der Hauptwelle (25) stehen, und der sekundäre Getrieberaum (10, 12) in eine Nicht-Eingriffsstellung verbracht wurde, wobei die Einrichtung eingerichtet ist, um Gangschaltelemente zu steuern, um einen Gangschaltvorgang zu beginnen, zum Gewinnen eines Gangeingreifens in dem sekundären Getrieberaum (10, 12) durch Steuern der ersten Synchronisierungseinrichtung, um diese zu aktivieren, um die Gangschaltelemente zu steuern, um einen Gangschaltvorgang zu beginnen, zum Gewinnen eines Gangeingriffs in dem grundlegenden Getrieberaum (11), bevor die synchrone Drehgeschwindigkeit durch die Wirkung der ersten Synchronisierungseinrichtung (22, 24) erhalten wurde, durch Steuern der zweiten Synchronisierungseinrichtung (23) des grundlegenden Getrieberaums (11), um diesen zu aktivieren, zum Unterstützen der ersten Synchronisierungseinrichtung (22, 24) bei dem Bewirken des Gewinnens der synchronen Drehgeschwindigkeit, und um die Gangschaltelemente zu steuern, um einen Gangschaltvorgang in dem sekundären Getrieberaum (10, 12) und in dem grundlegenden Getrieberaum (11) zu vollenden, wenn die synchrone Drehgeschwindigkeit erreicht wurde.

2. System gemäß Anspruch 1 zum Steuern des Gangschaltvorgangs in einem Kraftfahrzeug (1) mit einem Getriebe, das einen sekundären Getrieberaum in Form eines Bereichsgetrieberaums (12) aufweist, wobei die Einrichtung (20) eingerichtet ist, um den Gangschaltvorgang unter Beteiligung eines Schaltvorgangs des Gangs in dem Bereichsgetrieberaum (12) zu steuern.

3. System gemäß Anspruch 2, wobei
die Einrichtung (20) eingerichtet ist, um die erste Synchronisierungseinrichtung (24) zu einem Wirken auf die Hauptwelle (25) durch Herstellen einer beschleunigenden oder verzögernden Kopplung der Abtriebswelle (13) mit der Hauptwelle (25) zum Beeinflussen der Hauptwelle (25) hin zu der synchronen Drehgeschwindigkeit zu steuern, und um die zweite Synchronisierungseinrichtung (23) zu einem Wirken auf die Hauptwelle (25) durch Herstellen einer beschleunigenden oder verzögernden Kopplung der Antriebswelle (8) mit der Hauptwelle (25) zum Beeinflussen der Hauptwelle (25) hin zu der synchronen Drehgeschwindigkeit zu steuern.

4. System gemäß Anspruch 3 zum Steuern des Gangschaltvorgangs in einem Kraftfahrzeug (1), das einen grundlegenden Getrieberaum (11) mit einer Zwischenwelle (32) zum Koppeln der Antriebswelle (8) mit der Hauptwelle (25) aufweist, wobei die Zwischenwelle Gänge (33-35) aufweist, die in einen Gang (29-31) eingreifen, von denen jeder in die Hauptwelle (25) durch die Synchronisierungseinrichtung (23) des grundlegenden Getrieberaums (11) eingriffsfähig ist, wobei
die Einrichtung (20) eingerichtet ist, um eine Einrichtung zu steuern, um die Antriebswelle (8) und die Zwischenwelle (32) fest im Eingriff durch den Gangschaltvorgang hindurch zu halten.

5. System gemäß Anspruch 3 oder 4, das eingerichtet ist, um einen Gangschaltvorgang in einem Kraftfahrzeug (1) mit einem Getriebe, das einen geteilten Getrieberaum (10) zum Koppeln der Antriebswelle (8) mit dem grundlegenden Getrieberaum (11) aufweist, zu steuern, wobei
die Einrichtung (20) eingerichtet ist, um eine Einrichtung zu steuern, um einen geteilten Gang in einer Eingriffsposition durch den Gangschaltvorgang hindurch zu halten.

6. System gemäß Anspruch 5, wobei
die Einrichtung eingerichtet ist, um den geteilten Getrieberaum (10) zu steuern, um die Antriebswelle (8) und die Zwischenwelle (32) durch den Gangschaltvorgang hindurch fest im Eingriff zu halten.

7. System gemäß Anspruch 1 zum Steuern eines Gangschaltvorgangs in einem Kraftfahrzeug (1) mit einem Getriebe, das einen sekundären Getrieberaum in Form eines geteilten Getrieberaums (10) aufweist, wobei
die Einrichtung (20) eingerichtet ist, um einen Gangschaltvorgang unter Beteiligung eines Schaltvorgangs des Gangs in dem geteilten Getrieberaum (10) zu steuern.

8. System gemäß Anspruch 7, wobei
die Einrichtung (20) eingerichtet ist, um die erste Synchronisierungseinrichtung zu einem Wirken auf eine Welle des geteilten Getrieberaums (10) durch Herstellen einer beschleunigenden oder verzögernden Kopplung der Antriebswelle (8) mit der Welle des geteilten Getrieberaums zum Beeinflussen der Welle des geteilten Getrieberaums hin zu der synchronen Drehgeschwindigkeit zu steuern, die Einrichtung eingerichtet ist, um eine Einrichtung zu steuern, um die Hauptwelle (25) und Abtriebswelle (8) durch den Gangschaltvorgang hindurch fest im Eingriff zu halten, und die Einrichtung eingerichtet ist, um die zweite Synchronisierungseinrichtung (23) zu einem Wirken auf die Welle des geteilten Getrieberaums durch Herstellen einer beschleunigenden oder verzögernden Kopplung der Hauptwelle (25) mit der Welle des geteilten Getrieberaums zum Beeinflussen der Welle des geteilten Getrieberaums hin zu der synchronen Drehgeschwindigkeit zu steuern.

9. System gemäß Anspruch 8, in dem die Welle des geteilten Getrieberaums durch einen Teil einer Zwischenwelle (32) des grundlegenden Getrieberaums (11) ausgebildet ist, der zum Koppeln der Antriebswelle (8) mit der Hauptwelle (25) eingerichtet ist, wobei die Zwischenwelle (32) Gänge (33-35) aufweist, die in einen Gang (29-31) eingreifen, von denen jeder mit der Hauptwelle (25) durch die zweite Synchronisierungseinrichtung (23) des grundlegenden Getrieberaums (11) eingriffsfähig ist, wobei
die Einrichtung eingerichtet ist, um die erste Synchronisierungseinrichtung (22) des geteilten Getrieberaums zu einem Wirken auf die Zwischenwelle (32) durch Beeinflussen von Gängen des geteilten Getrieberaums zum Ausbilden eines Eingriffs mit der Antriebswelle (8) zu steuern.

10. System gemäß Anspruch 8 oder 9 zum Steuern des Gangschaltvorgangs in einem Kraftfahrzeug (1), das ein Getriebe mit einem Bereichsgetrieberaum (12) zum Koppeln der Abtriebswelle (13) mit dem grundlegenden Getrieberaum (11) aufweist, wobei
die Einrichtung eingerichtet ist, um eine Einrichtung zu steuern, um einen Bereichsgang durch den Gangschaltvorgang hindurch in dem geteilten Getrieberaum (10) in einer Eingriffsstellung zu halten.

11. Verfahren für einen Gangschaltvorgang in einem Kraftfahrzeug (1) mit einem mechanischen Automatikgetriebe, auch als AMT definiert, das einen grundlegenden Getrieberaum (11) mit einer Hauptwelle (25) und zumindest einen sekundären Getrieberaum aufweist, wie einen Bereichsgetrieberaum (12) oder einen geteilten Getrieberaum (10), wobei die Hauptwelle (25) durch eine Antriebswelle (8) des Getriebes mit einer Welle (6) der Brennkraftmaschine (5) des Fahrzeugs koppelbar ist und durch eine Abtriebswelle (13) des Getriebes mit einer angetriebenen Achse (3) des Fahrzeugs koppelbar ist,
in dem der Gangschaltvorgang einen Schaltvorgang eines Gangs in dem sekundären Getrieberaum (10, 12) beinhaltet und die nachfolgenden Schritte umfasst:
a) der grundlegende Getrieberaum (11) wird in eine neutrale Stellung verbracht, wobei dessen Gänge (29-31) aus dem Eingriff mit der Hauptwelle (25) gegangen sind, und der sekundäre Getrieberaum (10, 12) wird in eine Nicht-Eingriffsposition verbracht,
b) die Drehgeschwindigkeit der Brennkraftmaschine (6) bei dem Gang des Getriebes, der durch den Gangschaltvorgang auszuwählen ist, wird für die momentane Drehgeschwindigkeit der angetriebenen Achse (3) und durch jene der Abtriebswelle (13) berechnet,
c) die Brennkraftmaschine (5) wird hin zu einer Drehgeschwindigkeit von deren Wellen (6) gesteuert, die der berechneten Drehgeschwindigkeit entspricht,
d) ein Gangschaltvorgang zum Gewinnen eines Gangeingreifens in dem sekundären Getrieberaum (10, 12) wird durch Aktivieren einer Synchronisierungseinrichtung (22, 24) des sekundären Getrieberaums (10, 12) begonnen zum Bewirken eines Gewinnens einer synchronen Drehgeschwindigkeit der Antriebswelle (8), der Hauptwelle (25) und der Abtriebswelle (13),
e) ein Gangschaltvorgang zum Gewinnen eines Gangeingriffs in dem grundlegenden Getrieberaum (11) wird begonnen, bevor die synchrone Drehgeschwindigkeit in dem vorstehenden Schritt d) gewonnen wurde, durch Aktivieren der Synchronisierungseinrichtung (23) des grundlegenden Getrieberaums (11) zum Unterstützen der Synchronisierungseinrichtung des sekundären Getrieberaums (10, 12) bei dem Bewirken eines Gewinnens der synchronen Drehgeschwindigkeit, und
f) der Gangschaltvorgang in dem sekundären Getrieberaum (10, 12) und in dem grundlegenden Getrieberaum (11) ist vollendet, wenn die synchrone Drehgeschwindigkeit erreicht wird.

12. Verfahren gemäß Anspruch 11, wobei
der Gangschaltvorgang einen Gangschaltvorgang in einem Bereichsgetrieberaum (12) des Getriebes beinhaltet.

13. Verfahren gemäß Anspruch 12, wobei
der vorstehende Schritt d) ein Steuern der Synchronisierungseinrichtung (24) des Bereichsgetrieberaums (12) zu einem Wirken auf die Hauptwelle (25) durch Herstellen einer beschleunigenden oder verzögernden Kopplung der Abtriebswelle (13) mit der Hauptwelle zum Beeinflussen der Hauptwelle (25) hin zu der synchronen Drehgeschwindigkeit umfasst, und der vorstehende Schritt e) ein Steuern der Synchronisierungseinrichtung (23) des grundlegenden Getrieberaums (11) zu einem Wirken auf die Hauptwelle durch Herstellen einer beschleunigenden oder verzögernden Kopplung der Antriebswelle (8) mit der Hauptwelle (25) zum Beeinflussen der Hauptwelle (2) hin zu der synchronen Drehgeschwindigkeit umfasst.

14. Verfahren gemäß Anspruch 13, wobei
der Gangschaltvorgang für einen grundlegenden Getrieberaum (11) ausgeführt wird, der eine Zwischenwelle (32) zum Koppeln der Antriebswelle (8) mit der Hauptwelle (25) aufweist, wobei die Zwischenwelle Gänge (33-35) aufweist, die in einen Gang (29-31) eingreifen, von denen jeder mit der Hauptwelle durch die Synchronisierungseinrichtung (23) des grundlegenden Getrieberaums (11) eingriffsfähig ist, und wobei die Antriebswelle (8) und die Zwischenwelle (32) durch den Gangschaltvorgang hindurch fest in Eingriff gehalten werden.

15. Verfahren gemäß Anspruch 13 oder 14, wobei
es für ein Getriebe mit einem geteilten Getrieberaum (10) zum Koppeln der Antriebswelle (8) mit dem geteilten Getrieberaum (11) ausgeführt wird, und wobei ein geteilter Gang durch den Gangschaltvorgang hindurch in einer Eingriffsstellung gehalten wird.

16. Verfahren gemäß Anspruch 15, wobei
der geteilte Getrieberaum (10) gesteuert wird, um die Antriebswelle (8) und die Zwischenwelle (32) durch den Gangschaltvorgang hindurch fest im Eingriff zu halten.

17. Verfahren gemäß Anspruch 11, wobei
der Gangschaltvorgang einen Gangschaltvorgang in einem geteilten Getrieberaum (10) des Getriebes beinhaltet.

18. Verfahren gemäß Anspruch 17, wobei
der vorstehende Schritt d) ein Steuern der Synchronisierungseinrichtung (24) des geteilten Getrieberaums (10) zu einem Wirken auf eine Welle des geteilten Getrieberaums durch Herstellen einer beschleunigenden oder verzögernden Kopplung der Antriebswelle (8) mit der Welle des geteilten Getrieberaums zum Beeinflussen der Welle des geteilten Getrieberaums hin zu der synchronen Drehgeschwindigkeit umfasst, wobei die Hauptwelle (25) und die Abtriebswelle (13) durch den Gangschaltvorgang hindurch fest im Eingriff gehalten werden, und wobei der vorstehende Schritt.e) ein Steuern der Synchronisierungseinrichtung (23) des grundlegenden Getrieberaums (11) zu einem Wirken auf die Welle des geteilten Getrieberaums durch Herstellen einer beschleunigenden oder verzögernden Kopplung der Hauptwelle mit der Welle des geteilten Getrieberaums zum Beeinflussen der Welle des geteilten Getrieberaums hin zu der synchronen Drehgeschwindigkeit umfasst.

19. Verfahren gemäß Anspruch 18, wobei
die Welle des geteilten Getrieberaums durch einen Teil einer Zwischenwelle (32) des grundlegenden Getrieberaums (11) ausgebildet ist, der zum Koppeln der Antriebswelle (8) mit der Hauptwelle (25) eingerichtet ist, wobei die Zwischenwelle (32) Gänge (33-35) aufweist, die in einen Gang (29-31) eingreifen, von denen jeder mit der Hauptwelle (25) durch die Synchronisierungseinrichtung (23) des grundlegenden Getrieberaums eingriffsfähig ist, und wobei das Steuern in Schritt e) ein Steuern der Synchronisierungseinrichtung (22) des geteilten Getrieberaums (10) zu einem Wirken auf die Zwischenwelle (32) durch Beeinflussen von Gängen des geteilten Getrieberaums (10) umfasst, um einen Eingriff mit der Antriebswelle (8) auszubilden.

20. Verfahren gemäß Anspruch 18 oder 19, wobei
es für ein Getriebe ausgeführt wird, das einen Bereichsgetrieberaum (12) zum Koppeln der Abtriebswelle (13) mit dem grundlegenden Getrieberaum (11) aufweist, und wobei ein Bereichsgang durch den Gangschaltvorgang hindurch in einer Eingriffsposition gehalten wird.

21. Computerprogramm, das in den internen Speicher eines Computers ladbar ist, wobei das Computerprogramm Computerprogrammcode umfasst, um den Computer für ein Kraftfahrzeug (1), das mit einem mechanischen Automatikgetriebe, auch als AMT definiert, versehen ist, das einen grundlegenden Getrieberaum (11) mit einer Hauptwelle (25) und zumindest einen sekundären Getrieberaum aufweist, wie einen Bereichsgetrieberaum (12) oder einen geteilten Getrieberaum (10), wobei die Hauptwelle durch eine Antriebswelle (8) des Getriebes mit einer Welle (6) einer Brennkraftmaschine (5) des Fahrzeugs koppelbar ist, und durch eine Abtriebswelle (13) des Getriebes mit einer angetriebenen Achse des Fahrzeugs koppelbar ist, in dem das Computerprogramm eingerichtet ist, um einen Gangschaltvorgang zu steuern, der einen Schaltvorgang eines Gangs in dem sekundären Getrieberaum (10, 12) beinhaltet, zu veranlassen:
- um eine Steuerung des grundlegenden Getrieberaums (11) zu einem Bewegen in eine neutrale Stellung zu erfassen, in der dessen Gänge aus dem Eingriff mit der Hauptwelle (25) gehen, wobei der sekundäre Getrieberaum (10, 12) in eine Nicht-Eingriffsstellung zu verbringen ist,
- um die Drehgeschwindigkeit der Brennkraftmaschine (6) bei dem Gang des Getriebes zu berechnen, der durch den Gangschaltvorgang für die momentane Drehgeschwindigkeit der angetriebenen Achse (3) und durch jenen der Abtriebswelle (13) auszuwählen ist,
- um die Brennkraftmaschine (5) hin zu einer Drehgeschwindigkeit von deren Welle (6) zu steuern, die der berechneten Drehgeschwindigkeit entspricht,
- um einen Gangschaltvorgang zum Gewinnen eines Gangeingriffs in dem sekundären Getrieberaum (10, 12) zu steuern, um zu starten, durch Steuern einer Synchronisierungseinrichtung (22, 24) des sekundären Getrieberaums, um diesen zu aktivieren, zum Bewirken eines Gewinnens einer synchronen Drehgeschwindigkeit der Antriebswelle (8), der Hauptwelle (25) und der Abtriebswelle (13),
- um einen Gangschaltvorgang zum Gewinnen eines Gangeingriffs in dem grundlegenden Getrieberaum (11) zu steuern, um zu starten, bevor die synchrone Drehgeschwindigkeit durch Steuern der Synchronisierungseinrichtung (23) des grundlegenden Getrieberaums (11) gewonnen wurde, der zu aktivieren ist, zum Unterstützen der Synchronisierungseinrichtung des sekundären Getrieberaums (10, 12) beim Bewirken eines Gewinnens der synchronen Drehgeschwindigkeit, und
- um den Gangschaltvorgang in dem sekundären Getrieberaum (10, 12) und in dem grundlegenden Getrieberaum (11) zur Vollendung zu steuern, wenn die synchrone Drehgeschwindigkeit erreicht wird.

22. Computerprogramm gemäß Anspruch 21, wobei das Computerprogramm Computerprogrammcode umfasst, um den Computer zu veranlassen:
- um einen Gangschaltvorgang zu steuern, der einen Gangschaltvorgang in einem Bereichsgetrieberaum (12) des Getriebes beinhaltet.

23. Computerprogramm gemäß Anspruch 22, wobei das Computerprogramm Computerprogrammcode umfasst, um den Computer zu veranlassen:
- um die Synchronisierungseinrichtung (24) des Bereichsgetrieberaums (12) zu einem Wirken auf die Hauptwelle (25) durch Herstellen einer beschleunigenden oder verzögernden Kopplung der Abtriebswelle (13) mit der Hauptwelle (25) zum Beeinflussen der Hauptwelle (25) hin zu der synchronen Drehgeschwindigkeit zu steuern, und
- um die Synchronisierungseinrichtung (23) des grundlegenden Getrieberaums zu einem Wirken auf die Hauptwelle (25) durch Herstellen einer beschleunigenden oder verzögernden Kopplung der Antriebswelle (8) mit der Hauptwelle (25) zum Beeinflussen der Hauptwelle (25) hin zu der synchronen Drehgeschwindigkeit zu steuern.

24. Computerprogramm gemäß Anspruch 23, wobei das Computerprogramm Computerprogrammcode umfasst, um den Computer zu veranlassen:
- um den Gangschaltvorgang für einen grundlegenden Getrieberaum (11) zu steuern, der eine Zwischenwelle (32) zum Koppeln der Antriebswelle (8) mit der Hauptwelle aufweist, wobei die Zwischenwelle Gänge (33-35) aufweist, die in einen Gang (29-31) eingreifen, von denen jeder mit der Hauptwelle (25) durch die Synchronisierungseinrichtung des grundlegenden Getrieberaums (11) eingriffsfähig ist, und
- um die Antriebswelle (8) und die Zwischenwelle (32) zu steuern, um durch den Gangschaltvorgang hindurch fest im Eingriff gehalten zu werden.

25. Computerprogramm gemäß Anspruch 23 oder 24, wobei das Computerprogramm Computerprogrammcode umfasst, um den Computer zu veranlassen:
- um den Gangschaltvorgang für ein Getriebe zu steuern, das einen geteilten Getrieberaum (10) zum Koppeln der Antriebswelle (8) mit dem grundlegenden Getrieberaum (11) aufweist, und
- um einen geteilten Gang zu steuern, durch den Gangschaltvorgang hindurch in einer Eingriffsstellung gehalten zu werden.

26. Computerprogramm gemäß Anspruch 25, wobei das Computerprogramm Computerprogrammcode umfasst, um den Computer zu veranlassen:
- um den geteilten Getrieberaum (10) zu steuern, um die Antriebswelle (8) und die Zwischenwelle (32) durch den Gangschaltvorgang hindurch fest im Eingriff zu halten.

27. Computerprogramm gemäß Anspruch 21, wobei das Computerprogramm Computerprogrammcode umfasst, um den Computer zu veranlassen:
- um den Gangschaltvorgang zu steuern, der einen Gangschaltvorgang in einem geteilten Getrieberaum (10) des Getriebes beinhaltet.

28. Computerprogramm gemäß Anspruch 27, wobei das Computerprogramm Computerprogrammcode umfasst, um den Computer zu veranlassen:
- um die Synchronisierungseinrichtung (22) des geteilten Getrieberaums (10) zu einem Wirken auf eine Welle des geteilten Getrieberaums (10) durch Herstellen einer beschleunigenden oder verzögernden Kopplung der Antriebswelle (8) mit der Welle des geteilten Getrieberaums zum Beeinflussen der Welle des geteilten Getrieberaums hin zu der synchronen Drehgeschwindigkeit zu steuern,
- um die Hauptwelle (25) und die Antriebswelle (8) zu steuern, um durch den Gangschaltvorgang hindurch fest im Eingriff gehalten zu werden, und
- um die Synchronisierungseinrichtung (23) des grundlegenden Getrieberaums (11) zu einem Wirken auf die Welle des geteilten Getrieberaums durch Herstellen einer beschleunigenden oder verzögernden Kopplung der Hauptwelle (25) mit der Welle des geteilten Getrieberaums zum Beeinflussen der Welle des geteilten Getrieberaums hin zu der synchronen Drehgeschwindigkeit zu steuern.

29. Computerprogramm gemäß Anspruch 28, in dem die Welle des geteilten Getrieberaums durch einen Teil einer Zwischenwelle (32) des grundlegenden Getrieberaums ausgebildet ist, der zum Koppeln der Antriebswelle (8) mit der Hauptwelle (25) eingerichtet ist, wobei die Zwischenwelle Gänge (33-35) aufweist, die in einen Gang (29-31) eingreifen, der mit der Hauptwelle (25) durch die Synchronisierungseinrichtung (23) des grundlegenden Getrieberaums (11) eingriffsfähig ist, wobei das Computerprogramm Computerprogrammcode umfasst, um den Computer zu veranlassen:
- um die Synchronisierungseinrichtung (22) des geteilten Getrieberaums (10) zu einem Wirken auf die Zwischenwelle (32) durch Beeinflussen von Gängen des geteilten Getrieberaums (10) zu steuern, um einen Eingriff mit der Antriebswelle (8) auszubilden zum Beeinflussen der Zwischenwelle (32) hin zu der synchronen Drehgeschwindigkeit zu steuern.

30. Computerprogramm gemäß Anspruch 28 oder 29 zum Steuern des Gangschaltvorgangs für ein Getriebe, das einen Bereichsgetrieberaum (12) zum Koppeln der Abtriebswelle (13) mit dem grundlegenden Getrieberaum (11) aufweist, wobei das Computerprogramm Computerprogrammcode umfasst, um den Computer zu veranlassen:
- um einen Bereichsgang zu steuern, durch den Gangschaltvorgang hindurch in einer Eingriffsposition gehalten zu werden.

31. Computerprogrammprodukt, umfassend ein Datenspeichermedium (44), das durch ein elektronische Einheit (40) lesbar ist, wobei ein Computerprogramm gemäß zumindest einem der Ansprüche 21 bis 30 auf dem Datenspeichermedium gespeichert ist.

32. Elektronische Einheit, umfassend eine Ausführungseinrichtung (41), einen Speicher (42), der mit der Ausführungseinrichtung verbunden ist, und ein Datenspeichermedium (44), das mit der Ausführungseinrichtung verbunden ist, wobei ein Computerprogramm gemäß zumindest einem der Ansprüche 21 bis 30 auf dem Datenspeichermedium gespeichert ist.

## Revendications

1. Système pour commander un changement de vitesses dans un véhicule à moteur (1), muni de :
- un moteur (5),
- une transmission mécanique automatique, également définie sous le nom d'AMT, comportant une boîte de vitesses de base (11) avec un arbre principal (25) et au moins une boîte de vitesses secondaire, telle qu'une boîte de vitesses de plage (12) ou une boîte de vitesses divisée (10), ledit arbre principal pouvant être, par l'intermédiaire d'un arbre d'entrée (8) de la transmission, relié à un arbre (6) dudit moteur (5), et, par l'intermédiaire d'un arbre de sortie (13) de la transmission, à un essieu entraîné (3) du véhicule (1),
- des premiers moyens de synchronisation (22, 24) de ladite boîte de vitesses secondaire (10, 12) adaptés de façon à être actionnés lors d'un changement de vitesses dans la boîte de vitesses secondaire (10, 12) afin d'agir de façon à obtenir une vitesse de rotation synchrone dudit arbre d'entrée (8), dudit arbre principal (25) et dudit arbre de sortie (13),
- des moyens pour calculer la vitesse de rotation dudit arbre moteur (6) à la vitesse de la transmission devant être sélectionnée par une opération de changement de vitesses pour la vitesse de rotation actuelle dudit essieu entraîné (3) et par celle dudit arbre de sortie (13), et
- des moyens pour commander, dans ladite opération de changement de vitesses, ledit moteur (5) vers une vitesse de rotation dudit arbre de celui-ci correspondant à ladite vitesse de rotation calculée,
dans lequel le système comprend également :
- des deuxièmes moyens de synchronisation (23) associés à ladite boîte de vitesses de base (11) afin d'agir de façon à obtenir une vitesse de rotation synchrone dudit arbre d'entrée (8), dudit arbre principal (25) et dudit arbre de sortie (13), et
- un dispositif (20) adapté de façon à commander ledit changement de vitesses, mettant en oeuvre un changement de vitesses dans ladite boîte de vitesses secondaire (10, 12) après que la boîte de vitesses de base (11) ait été amenée dans une position neutre avec les engrenages (29 à 31) de celle-ci désengrenés vis-à-vis dudit arbre principal (25) et que ladite boîte de vitesses secondaire (10, 12) ait été amenée dans une position désengagée, ledit dispositif étant adapté de façon à commander des éléments de changement de vitesses pour démarrer un changement de vitesses afin d'obtenir un engagement de vitesse dans ladite boîte de vitesses secondaire (10, 12) par la commande desdits premiers moyens de synchronisation de telle sorte qu'il soient activés, afin de commander des éléments de changement de vitesses de façon à démarrer un changement de vitesses pour obtenir un engagement de vitesse dans ladite boîte de vitesses de base (11) avant que ladite vitesse de rotation synchrone n'ait été obtenue par l'action desdits premiers moyens de synchronisation (22, 24) par la commande desdits deuxièmes moyens de synchronisation (23) de ladite boîte de vitesses de base (11) de façon à ce qu'elle soit actionnée de façon à aider lesdits premiers moyens de synchronisation (22, 24) à agir de façon à obtenir ladite vitesse de rotation synchrone et à commander lesdits éléments de changement de vitesses de façon à achever un changement de vitesses dans la boîte de vitesses secondaire (10, 12) et dans la boîte de vitesses de base (11) lorsque ladite vitesse de rotation synchrone a été atteinte.

2. Système selon la revendication 1 pour commander un changement de vitesses dans un véhicule à moteur (1) avec une transmission comportant une boîte de vitesses secondaire sous la forme d'une boîte de vitesses de plage (12), dans lequel ledit dispositif (20) est adapté de façon à commander ledit changement de vitesses, mettant en oeuvre un changement de vitesses dans ladite boîte de vitesses de plage (12).

3. Système selon la revendication 2, dans lequel :
ledit dispositif (20) est adapté de façon à commander lesdits premiers moyens de synchronisation (24) de façon à agir sur ledit arbre principal (25) par l'établissement d'une liaison d'accélération ou de retard dudit arbre de sortie (13) avec ledit arbre principal (25) de façon à influencer l'arbre principal (25) vers ladite vitesse de rotation synchrone et à commander lesdits deuxièmes moyens de synchronisation (23) de façon à agir sur ledit arbre principal (25) par l'établissement d'une liaison d'accélération ou de retard dudit arbre d'entrée (8) avec ledit arbre principal (25) de façon à influencer l'arbre principal (25) vers ladite vitesse de rotation synchrone.

4. Système selon la revendication 3 pour commander un changement de vitesses dans un véhicule à moteur (1), comportant une boîte de vitesses de base (11) avec un arbre intermédiaire (32) pour relier ledit arbre d'entrée (8) audit arbre principal (25), ledit arbre intermédiaire comportant des engrenages (33 à 35) s'engrenant avec un engrenage (29 à 31) pouvant chacun s'engrener avec ledit arbre principal (25) à l'aide de moyens de synchronisation (23) de ladite boîte de vitesses de base (11), dans lequel :
le dispositif (20) est adapté de façon à commander des moyens pour maintenir ledit arbre d'entrée (8) et ledit arbre intermédiaire (32) en prise rigide tout du long dudit changement de vitesses.

5. Système selon la revendication 3 ou 4, qui est adapté de façon à commander un changement de vitesses dans un véhicule à moteur (1), avec une transmission comportant une boîte de vitesses divisée (10) pour relier ledit arbre d'entrée (8) à ladite boîte de vitesses de base (11), dans lequel :
ledit dispositif (20) est adapté de façon à commander des moyens pour maintenir un pignon en deux pièces en position engrenée tout du long dudit changement de vitesses.

6. Système selon la revendication 5, dans lequel :
ledit dispositif est adapté de façon à commander ladite boîte de vitesses divisée (10) de façon à maintenir ledit arbre d'entrée (8) et ledit arbre intermédiaire (32) en prise rigide tout du long dudit changement de vitesses.

7. Système selon la revendication 1 pour commander un changement de vitesses dans un véhicule à moteur (1) avec une transmission comportant une boîte de vitesses secondaire sous la forme d'une boîte de vitesses divisée (10), dans lequel :
ledit dispositif (20) est adapté de façon à commander un changement de vitesses mettant en oeuvre un changement de vitesses dans ladite boîte de vitesses divisée (10).

8. Système selon la revendication 7, dans lequel :
le dispositif (20) est adapté de façon à commander lesdits premiers moyens de synchronisation de façon à agir sur un arbre de ladite boîte de vitesses divisée (10) par l'établissement d'une liaison d'accélération ou de retard dudit arbre d'entrée (8) avec ledit arbre de boîte de vitesses divisée de façon à influencer ledit arbre de boîte de vitesses divisée vers ladite vitesse de rotation synchrone, ledit dispositif étant adapté de façon à commander des moyens pour maintenir l'arbre principal (25) et l'arbre de sortie (8) en prise rigide tout du long dudit changement de vitesses, et ledit dispositif étant adapté de façon à commander lesdits deuxièmes moyens de synchronisation (23) de façon à agir sur ledit arbre de boîte de vitesses divisée par l'établissement d'une liaison d'accélération ou de retard dudit arbre principal (25) avec ledit arbre de boîte de vitesses divisée de façon à influencer l'arbre de boîte de vitesses divisée vers ladite vitesse de rotation synchrone.

9. Système selon la revendication 8, dans lequel ledit arbre de boîte de vitesses divisée est formé par une partie d'un arbre intermédiaire (32) de la boîte de vitesses de base (11) adapté de façon à relier ledit arbre d'entrée (8) à l'arbre principal (25), ledit arbre intermédiaire (32) comportant des engrenages (33 à 35) s'engrenant avec un engrenage (29 à 31) pouvant chacun s'engrener avec ledit arbre principal (25) à l'aide desdits deuxièmes moyens de synchronisation (23) de ladite boîte de vitesses de base (11), dans lequel :
ledit dispositif est adapté de façon à commander lesdits premiers moyens de synchronisation (22) de ladite boîte de vitesses divisée de façon à agir sur ledit arbre intermédiaire (32) par le fait d'influencer des engrenages de ladite boîte de vitesses divisée pour former un engrènement avec ledit arbre d'entrée (8).

10. Système selon la revendication 8 ou 9 pour commander un changement de vitesses dans un véhicule à moteur (1), comportant une transmission avec une boîte de vitesses de plage (12) pour relier ledit arbre de sortie (13) à ladite boîte de vitesses de base (11), dans lequel :
ledit dispositif est adapté de façon à commander des moyens pour maintenir un engrenage de plage en position engrenée tout du long dudit changement de vitesses dans ladite boîte de vitesses divisée (10).

11. Procédé pour un changement de vitesses dans un véhicule à moteur (1) avec une transmission mécanique automatique, également définie sous le nom d'AMT, comportant une boîte de vitesses de base (11) avec un arbre principal (25) et au moins une boîte de vitesses secondaire, telle qu'une boîte de vitesses de plage (12) ou une boîte de vitesses divisée (10), ledit arbre principal (25) pouvant être, par l'intermédiaire d'un arbre d'entrée (8) de la transmission, relié à un arbre (6) d'un moteur (5) du véhicule, et, par l'intermédiaire d'un arbre de sortie (13) de la transmission, à un essieu entraîné (3) du véhicule,
dans lequel ledit changement de vitesses met en oeuvre un changement de vitesses dans ladite boîte de vitesses secondaire (10, 12), et comprend les étapes suivantes :
a) la boîte de vitesses de base (11) est amenée dans une position neutre avec les engrenages (29 à 31) de celle-ci désengrenés vis-à-vis dudit arbre principal (25) et ladite boîte de vitesses secondaire (10, 12) est amenée dans la position désengagée,
b) la vitesse de rotation dudit arbre moteur (6) à la vitesse de la transmission devant être sélectionnée par ladite opération de changement de vitesses est calculée pour la vitesse de rotation actuelle dudit essieu entraîné (3) et par celle dudit arbre de sortie (13),
c) le moteur (5) est commandé vers une vitesse de rotation dudit arbre (6) de celui-ci correspondant à ladite vitesse de rotation calculée,
d) un changement de vitesses pour obtenir un engagement de vitesse dans la boîte de vitesses secondaire (10, 12) est démarré par l'actionnement de moyens de synchronisation (22, 24) de ladite boîte de vitesses secondaire (10, 12) afin d'agir de façon à obtenir une vitesse de rotation synchrone dudit arbre d'entrée (8), dudit arbre principal (25) et dudit arbre de sortie (13),
e) un changement de vitesses pour obtenir un engagement de vitesse dans la boîte de vitesses de base (11) est démarré avant que ladite vitesse de rotation synchrone n'ait été obtenue dans l'étape d) précédemment mentionnée par l'actionnement de moyens de synchronisation (23) de ladite boîte de vitesses de base (11) pour aider lesdits moyens de synchronisation de la boîte de vitesses secondaire (10, 12) à agir de façon à obtenir ladite vitesse de rotation synchrone, et
f) ledit changement de vitesses dans la boîte de vitesses secondaire (10, 12) et dans la boîte de vitesses de base (11) sont achevés lorsque ladite vitesse de rotation synchrone est atteinte.

12. Procédé selon la revendication 11, dans lequel :
ledit changement de vitesses comprend un changement de vitesses dans une boîte de vitesses de plage (12) de ladite transmission.

13. Procédé selon la revendication 12, dans lequel :
l'étape d) précédemment mentionnée comprend la commande de moyens de synchronisation (24) de ladite boîte de vitesses de plage (12) de façon à agir sur ledit arbre principal (25) par l'établissement d'une liaison d'accélération ou de retard dudit arbre de sortie (13) avec ledit arbre principal de façon à influencer l'arbre principal (25) vers ladite vitesse de rotation synchrone, et l'étape e) précédemment mentionnée comprend la commande desdits moyens de synchronisation (23) de la boîte de vitesses de base (11) de façon à agir sur ledit arbre principal par l'établissement d'une liaison d'accélération ou de retard dudit arbre d'entrée (8) avec ledit arbre principal (25) de façon à influencer l'arbre principal (25) vers ladite vitesse de rotation synchrone.

14. Procédé selon la revendication 13, dans lequel :
ledit changement de vitesses est effectué pour une boîte de vitesses de base (11) comportant un arbre intermédiaire (32) pour relier ledit arbre d'entrée (8) à l'arbre principal (25), ledit arbre intermédiaire (32) comportant des engrenages (33 à 35) s'engrenant avec un engrenage (29 à 31) pouvant chacun s'engrener avec ledit arbre principal à l'aide de moyens de synchronisation (23) de ladite boîte de vitesses de base (11), et ledit arbre d'entrée (8) et ledit arbre intermédiaire (32) étant maintenus en prise rigide tout du long dudit changement de vitesses.

15. Procédé selon la revendication 13 ou 14, dans lequel :
il est réalisé une transmission comportant une boîte de vitesses divisée (10) pour relier ledit arbre d'entrée (8) à la boîte de vitesses de base (11), et un pignon en deux pièces est maintenu en position engrenée tout du long dudit changement de vitesses.

16. Procédé selon la revendication 15, dans lequel :
ladite boîte de vitesses divisée (10) est commandée de façon à maintenir ledit arbre d'entrée (8) et ledit arbre intermédiaire (32) en prise rigide tout du long dudit changement de vitesses.

17. Procédé selon la revendication 11, dans lequel :
ledit changement de vitesses comprend un changement de vitesses dans une boîte de vitesses divisée (10) de ladite transmission.

18. Procédé selon la revendication 17, dans lequel :
l'étape d) précédemment mentionnée comprend la commande de moyens de synchronisation (24) de ladite boîte de vitesses divisée (10) de façon à agir sur un arbre de ladite boîte de vitesses divisée par l'établissement d'une liaison d'accélération ou de retard dudit arbre d'entrée (8) avec ledit arbre de boîte de vitesses divisée de façon à influencer ledit arbre de boîte de vitesses divisée vers ladite vitesse de rotation synchrone, l'arbre principal (25) et l'arbre de sortie (13) étant maintenus en prise rigide tout du long dudit changement de vitesses, et l'étape e) précédemment mentionnée comprend la commande desdits moyens de synchronisation (23) de la boîte de vitesses de base (11) de façon à agir sur ledit arbre de boîte de vitesses divisée par l'établissement d'une liaison d'accélération ou de retard dudit arbre principal avec ledit arbre de boîte de vitesses divisée de façon à influencer l'arbre de boîte de vitesses divisée vers ladite vitesse de rotation synchrone.

19. Procédé selon la revendication 18, dans lequel :
ledit arbre de boîte de vitesses divisée est formé par une partie d'un arbre intermédiaire (32) de la boîte de vitesses de base (11) adapté de façon à relier ledit arbre d'entrée (8) à l'arbre principal (25), ledit arbre intermédiaire (32) comportant des engrenages (33 à 35) s'engrenant avec un engrenage (29 à 31) pouvant chacun s'engrener avec ledit arbre principal (25) à l'aide de moyens de synchronisation (23) de ladite boîte de vitesses de base, ladite commande dans l'étape e) comprenant une commande desdits moyens de synchronisation (22) de ladite boîte de vitesses divisée (10) de façon à agir sur ledit arbre intermédiaire (32) par le fait d'influencer des engrenages de ladite boîte de vitesses divisée (10) pour former un engrènement avec ledit arbre d'entrée (8).

20. Procédé selon la revendication 18 ou 19, dans lequel :
il est réalisé une transmission comportant une boîte de vitesses de plage (12) pour relier ledit arbre de sortie (13) à la boîte de vitesses de base (11), et un engrenage de plage est maintenu en position engrenée tout du long dudit changement de vitesses.

21. Programme informatique pouvant être chargé dans la mémoire interne d'un ordinateur, ce programme informatique comprenant un code de programme informatique pour amener l'ordinateur, pour un véhicule à moteur (1) muni d'une transmission mécanique automatique, également définie sous le nom d'AMT, comportant une boîte de vitesses de base (11) avec un arbre principal (25) et au moins une boîte de vitesses secondaire, telle qu'une boîte de vitesses de plage (12) ou une boîte de vitesses divisée (10), ledit arbre principal pouvant être, par l'intermédiaire d'un arbre d'entrée (8) de la transmission, relié à un arbre (6) d'un moteur (5) du véhicule, et, par l'intermédiaire d'un arbre de sortie (13) de la transmission, à un essieu entraîné (3) du véhicule, dans lequel le programme informatique est adapté de façon à commander un changement de vitesses mettant en oeuvre un changement de vitesses dans ladite boîte de vitesses secondaire (10, 12) :
- à détecter une commande de ladite boîte de vitesses de base (11) pour passer dans une position neutre avec les engrenages de celle-ci désengrenés vis-à-vis dudit arbre principal (25), et ladite boîte de vitesses secondaire (10, 12) devant être amenée dans une position désengagée,
- à calculer la vitesse de rotation dudit arbre moteur (6) à la vitesse de la transmission devant être sélectionnée par ladite opération de changement de vitesses pour la vitesse de rotation actuelle dudit essieu entraîné (3) et par celle dudit arbre de sortie (13),
- à commander le moteur (5) vers une vitesse de rotation dudit arbre (6) de celui-ci correspondant à ladite vitesse de rotation calculée,
- à commander un changement de vitesses pour obtenir un engagement de vitesse dans ladite boîte de vitesses secondaire (10, 12) pour un démarrage par la commande de moyens de synchronisation (22, 24) de ladite boîte de vitesses secondaire de telle sorte qu'elle soit actionnée afin d'agir de façon à obtenir une vitesse de rotation synchrone dudit arbre d'entrée (8), dudit arbre principal (25) et dudit arbre de sortie (13),
- à commander un changement de vitesses pour obtenir un engagement de vitesse dans ladite boîte de vitesses de base (11) pour un démarrage avant que ladite vitesse de rotation synchrone n'ait été obtenue par la commande de moyens de synchronisation (23) de ladite boîte de vitesses de base (11) de telle sorte qu'elle soit actionnée pour aider lesdits moyens de synchronisation de la boîte de vitesses secondaire (10, 12) à agir de façon à obtenir ladite vitesse de rotation synchrone, et
- à commander ledit changement de vitesses dans la boîte de vitesses secondaire (10, 12) et dans la boîte de vitesses de base (11) de telle sorte qu'il soit achevé lorsque ladite vitesse de rotation synchrone est atteinte.

22. Programme informatique selon la revendication 21, dans lequel le programme informatique comprend un code de programme informatique pour amener l'ordinateur :
- à commander un changement de vitesses comprenant un changement de vitesses dans une boîte de vitesses de plage (12) de ladite transmission.

23. Programme informatique selon la revendication 22, dans lequel le programme informatique comprend un code de programme informatique pour amener l'ordinateur :
- à commander lesdits moyens de synchronisation (24) de ladite boîte de vitesses de plage (12) de façon à agir sur ledit arbre principal (25) par l'établissement d'une liaison d'accélération ou de retard dudit arbre de sortie (13) avec ledit arbre principal (25) de façon à influencer l'arbre principal (25) vers ladite vitesse de rotation synchrone, et
- à commander lesdits moyens de synchronisation (23) de la boîte de vitesses de base de façon à agir sur ledit arbre principal (25) par l'établissement d'une liaison d'accélération ou de retard dudit arbre d'entrée (8) avec ledit arbre principal (25) de façon à influencer l'arbre principal (25) vers ladite vitesse de rotation synchrone.

24. Programme informatique selon la revendication 23, dans lequel le programme informatique comprend un code de programme informatique pour amener l'ordinateur :
- à commander un changement de vitesses pour une boîte de vitesses de base (11) comportant un arbre intermédiaire (32) pour relier ledit arbre d'entrée (8) à l'arbre principal, ledit arbre intermédiaire comportant des engrenages (33 à 35) s'engrenant avec un engrenage (29 à 31) pouvant chacun s'engrener avec ledit arbre principal (25) à l'aide de moyens de synchronisation de ladite boîte de vitesses de base (11), et
- à commander ledit arbre d'entrée (8) et ledit arbre intermédiaire (32) de façon à ce qu'ils soient maintenus en prise rigide tout du long dudit changement de vitesses.

25. Programme informatique selon la revendication 23 ou 24, dans lequel le programme informatique comprend un code de programme informatique pour amener l'ordinateur :
- à commander un changement de vitesses pour une transmission comportant une boîte de vitesses divisée (10) pour relier ledit arbre d'entrée (8) à la boîte de vitesses de base (11), et
- à commander un pignon en deux pièces de façon à ce qu'il soit maintenu en position engrenée tout du long dudit changement de vitesses.

26. Programme informatique selon la revendication 25, dans lequel le programme informatique comprend un code de programme informatique pour amener l'ordinateur :
- à commander ladite boîte de vitesses divisée (10) de façon à maintenir ledit arbre d'entrée (8) et ledit arbre intermédiaire (32) en prise rigide tout du long dudit changement de vitesses.

27. Programme informatique selon la revendication 21, dans lequel le programme informatique comprend un code de programme informatique pour amener l'ordinateur :
- à commander un changement de vitesses comprenant un changement de vitesses dans une boîte de vitesses divisée (10) de ladite transmission.

28. Programme informatique selon la revendication 27, dans lequel le programme informatique comprend un code de programme informatique pour amener l'ordinateur :
- à commander des moyens de synchronisation (22) de ladite boîte de vitesses divisée (10) de façon à agir sur un arbre de ladite boîte de vitesses divisée (10) par l'établissement d'une liaison d'accélération ou de retard dudit arbre d'entrée (8) avec ledit arbre de boîte de vitesses divisée de façon à influencer ledit arbre de boîte de vitesses vers ladite vitesse de rotation synchrone,
- à commander l'arbre principal (25) et l'arbre d'entrée (8) de façon à ce qu'ils soient maintenus en prise rigide tout du long dudit changement de vitesses, et
- à commander lesdits moyens de synchronisation (23) de la boîte de vitesses de base (11) de façon à agir sur ledit arbre de boîte de vitesses divisée par l'établissement d'une liaison d'accélération ou de retard dudit arbre principal (25) avec ledit arbre de boîte de vitesses divisée de façon à influencer l'arbre de boîte de vitesses divisée vers ladite vitesse de rotation synchrone.

29. Programme informatique selon la revendication 28, dans lequel ledit arbre de boîte de vitesses divisée est formé par une partie d'un arbre intermédiaire (32) de la boîte de vitesses de base adapté de façon à relier ledit arbre d'entrée (8) à l'arbre principal (25), ledit arbre intermédiaire comportant des engrenages (33 à 35) s'engrenant avec un engrenage (29 à 31) pouvant chacun s'engrener avec ledit arbre principal (25) à l'aide de moyens de synchronisation (23) de la boîte de vitesses de base (11), dans lequel le programme informatique comprend un code de programme informatique pour amener l'ordinateur :
- à commander des moyens de synchronisation (22) de ladite boîte de vitesses divisée (10) de façon à agir sur ledit arbre intermédiaire (32) par le fait d'influencer des engrenages de ladite boîte de vitesses divisée (10) pour former un engrènement avec ledit arbre d'entrée (8) de façon à influencer ledit arbre intermédiaire (32) vers ladite vitesse de rotation synchrone.

30. Programme informatique selon la revendication 28 ou 29 pour commander un changement de vitesse pour une transmission comportant une boîte de vitesses de plage (12) pour relier ledit arbre de sortie (13) à ladite boîte de vitesses de base (11), dans lequel le programme informatique comprend un code de programme informatique pour amener l'ordinateur :
- à commander un engrenage de plage de façon à ce qu'il soit maintenu en position engrenée tout du long dudit changement de vitesses.

31. Produit de programme informatique, comprenant un support de mémorisation de données (44) lisible par une unité électronique (40), dans lequel un programme informatique selon l'une quelconque des revendications 21 à 30 est mémorisé sur ledit support de mémorisation de données.

32. Unité électronique comprenant des moyens d'exécution (41), une mémoire (42) connectée aux moyens d'exécution et un support de mémorisation de données (44) connecté aux moyens d'exécution, dans laquelle un programme informatique selon l'une quelconque des revendications 21 à 30 est mémorisé sur ledit support de mémorisation de données.
